# EUROPÄISCHE PATENTANMELDUNG

(11) **EP 1 775 098 A1**
(43) Veröffentlichungstag der Anmeldung: **18.04.2007**
(21) Anmeldenummer: 06021405.3
(22) Anmeldetag: 12.10.2006
(51) Int. Cl.: B29C 47/50, B29C 47/64

(54) **Fördervorrichtung**

(30) Priorität: 12.10.2005 DE 102005048847
(71) Anmelder: VMI - AZ Extrusion GmbH, 93486 Runding (DE)
(72) Erfinder: Uphus, Reinhard, Dr., 30419 Hannover (DE)
(74) Vertreter: Baronetzky, Klaus

(57) **Zusammenfassung**

Die vorliegende Erfindung betrifft eine Fördervorrichtung (10), mit einem Extruder und einer an diese angeschlossenen Zahnradpumpe (30). Der Extruder weist ein Extrudergehäuse (12) auf, in welchem eine Extruderwalze (14) drehbar gelagert ist. Von der Extruderwalze (14) erstrecken sich eine Mehrzahl von Stiften (22) radial nach auswärts, wobei das Extrudergehäuse (12) spiralige Fördergänge (36) sowie Durchbrechungen für die Stifte aufweist.

## Beschreibung

Die Erfindung betrifft eine Fördervorrichtung, gemäß dem Oberbegriff von Anspruch 1.

Derartige Fördervorrichtungen sind seit einiger Zeit bekannt. Sie weisen als wesentliche Elemente einen Extruder und eine an den Extruder - sei es direkt, sei es indirekt - angeschlossene Zahnradpumpe auf, die häufig als Planetenpumpe ausgebildet ist. Durch die Wirkung des Extruders lässt sich eine recht hohe Förderleistung bereitstellen, und die Planetenpumpe ermöglicht die Realisierung eines hohen und auch gleichmäßigen Ausgangsdrucks.

Wenn mit der Fördervorrichtung Kunststoff wie Kautschuk oder dergleichen gefördert wird, ist es wesentlich, dass das zu fördernde Material homogenisiert wird. Häufig ist es zumindest in Teilbereichen - noch kalt oder hochviskos. Gerade derartige Kälteinseln neigen aber dazu, inhomogen zu verbleiben, denn sie durchmischen sich praktisch nicht mit dem übrigen Material. Um dies zu kompensieren, ist es bekannt geworden, den Extruder mit einem sogenannten Transfermixbereich auszurüsten, bei dem das Extrudat auf Kosten der Förderleistung besser durchgemischt wird.

Ferner sind verschiedene Maßnahmen vorgeschlagen worden, um bei einer Kombination aus Extruder und Zahnradpumpe die Durchmischung zu verbessern. Beispielsweise ist bei der Lösung gemäß der US-PS 46 42 040 ein schräger Kanal zwischen Extruder und Zahnradpumpe vorgesehen. Eine weitere Lösung ist aus der DE-PS 103 48 985 ersichtlich. Bei dieser Zahnradpumpe ist ein Transfermixbereich mit zur Zahnradpumpe zunehmender Gangtiefe vorgesehen. Zwar erlaubt diese Lösung eine vergleichsweise gute Förderleistung bei hohem Druck. Es wäre jedoch wünschenswert, die Mischung gerade auch bei unterschiedlichen Ausgangsmaterialien weiter zu verbessern.

Demgegenüber liegt der Erfindung die Aufgabe zugrunde, eine Fördervorrichtung gemäß dem Oberbegriff von Anspruch 1 zu schaffen, die einen verbesserten Durchsatz bei hohem Druck auch bei unterschiedlich und inhomogen vorliegendem Augangsmaterialien erwarten läßt.

Diese Aufgabe wird erfindungsgemäß durch Anspruch 1 gelöst. Vorteilhafte Weiterbildungen ergeben sich aus den Unteransprüchen.

Die erfindungsgemäße Lösung zeichnet sich durch die Kombination einer an sich bekannten Zahnradpumpe mit einem in besonderer Weise ausgebildetem Extruder aus: anstelle einer Extruderschnecke ist erfindungsgemäß eine Extruderwalze vorgesehen, die eine Mehrzahl von Stiften aufweist, die sich radial nach außwärts erstrecken. Das Extrudergehäuse weist erfindungsgemäß spiralige Fördergänge und Durchbrechungen für die Stifte auf. Nachdem die Extruderwalze zylindrisch ist, erfolgt damit die Materialförderung vollständig radial außerhalb der Extruderwalze, wobei sich eine überraschend gute Förderwirkung gepaart mit einer besonders guten Durchmischungswirkung ergibt. Ein besonderer Transferteil entfällt, so dass es insofern nicht zu einem Druckverlust kommt.

Erfindunggemäß ist es besonders günstig, wenn die Durchbrechungen in Förderstegen in dem Extrudergehäuse angebracht sind, die so dimensioniert sind, dass die Stifte sie bei Umdrehung der Extruderwalze gerade durchtreten können. Die Homogenisierungwirkung ergibt sich besonders an der stromabliegenden Seitenflanke der Durchbrechung, denn das zu homogenisierende Material wird dort aufgeteilt in einen Teil, der schräg axial gefördert wird, und einem Teil, der in tangentialer Richtung zunächst mitgenommen wird. Hierbei ergibt sich überraschend eine automatische Kompensation der Inhomogenitäten: wenn die Kautschukinassentemperatur niedrig ist, besteht eine vergleichsweise hohe Viskosität, so dass dann die Förderwirkung, die Scherwirkung und aufgrund der Reibung die Temperaturerhöhung größer ist. Durch diese Lösung werden vergleichsweise kalte Kautschukbereiche rasch zerteilt und dementsprechend erwärmt, während die Feinhomogenisierung des bereits flüssigeren Materials unter geringerer Materialbelastung erfolgen kann.

Besonders günstig ist es auch, dass die erfindungsgemäße Ausgestaltung des Extruders mit Extruderwalze und Fördergängen im Extrudergehäuse, wobei zusätzlich Stifte sich in Umfangsrichtung in Durchbrechungen drehen, besonders kompatibel zu Planentenpumpen ist, bei denen feststehende Planetenräder verwendet werden: die Ausrichtung der Förderstege gegenüber den Planetenrädern kann so gewählt werden, dass der Übergang im wesentlichen bündig erfolgt, und zwar auf der Förderseite der Förderstege. In diesem Zusammenhang ist es besonders günstig, wenn die Anzahl der Förderstege mit der Anzahl der Planetenräder übereinstimmt oder ganzzahlig vielfach hierzu ist, um insofern eine gleichförmige Einleitung des Extrudats zur Zahnradpumpe zu gewährleisten.

Es versteht sich ferner, dass beliebige geeignete Arten von Zahnradpumpen zum Einsatz gelangen können. Hierzu gehören die an sich bekannten schrägverzahnten Planetenpumpen und auch beispielsweise Zahnradpumpen mit zwei gegenläufigen Zahnrädern.

Gemäß einer besonders vorteilhaften Ausgestaltung ist vorgesehen, dass eine Extruderwalze in dem Extrudergehäuse drehbar gelagert ist, sich von der Extruderwalze eine Mehrzahl von Stiften radial nach auswärts erstreckt, und dass das Extrudergehäuse spiralige Fördergänge sowie Durchbrechungen für die Stifte aufweist.

Gemäß einer besonders vorteilhaften Ausgestaltung ist vorgesehen, dass die Extruderwalze mit einer Extruderschnecke verbunden ist, die Fördergänge aufweist, über welche der Extruderwalze zu förderndes Material zuführbar ist.

Gemäß einer besonders vorteilhaften Ausgestaltung ist vorgesehen, dass die Fördergänge im Extrudergehäuse eine Steigung von weniger als 2, insbesondere etwa 0,8 bis 1,6, bevorzugt etwa 1,2 aufweisen.

Gemäß einer besonders vorteilhaften Ausgestaltung ist vorgesehen, dass die Stifte der Extruderwalze sich je in einer Ebene erstrecken und innerhalb dieser symmetrisch verteilt sind, wobei insbesondere 4, 6 oder 8 Stifte pro Ebene angeordnet sind.

Gemäß einer besonders vorteilhaften Ausgestaltung ist vorgesehen, dass die Stifte je einen kreisförmigen Querschnitt aufweisen und einen Längen/Durchmesserverhältnis von 0,5 bis 2, bevorzugt etwa 1, aufweisen.

Gemäß einer besonders vorteilhaften Ausgestaltung ist vorgesehen, dass die Stifte sich durch im Wesentlichen die gesamte radiale Erstreckung der Fördergänge erstrecken und knapp, insbesondere etwa 5 bis 10%, vor der Wand des Extrudergehäuses, bezogen auf die radiale Höhe der Fördergänge, enden.

Gemäß einer besonders vorteilhaften Ausgestaltung ist vorgesehen, dass eine Mehrzahl, insbesondere 2 bis 20, bevorzugt 3 bis 12, und besonders bevorzugt 4 bis 8 Ebenen von Stiften axial aufeinanderfolgend angeordnet sind.

Gemäß einer besonders vorteilhaften Ausgestaltung ist vorgesehen, dass auf jeder Stiftebene eine gleiche Anzahl von Stiften angeordnet ist, und zwar bevorzugt axial zueinander ausgerichtet.

Gemäß einer besonders vorteilhaften Ausgestaltung ist vorgesehen, dass auf jeder Ebene die gleiche Anzahl von Stiften angeordnet sind, wobei die Stifte zueinander axial versetzt sind.

Gemäß einer besonders vorteilhaften Ausgestaltung ist vorgesehen, dass die Stifte in mehreren Stiftebenen angeordnet sind und mindestens 2 Stiftebenen unterschiedliche Anzahlen von Stiften aufweisen.

Gemäß einer besonders vorteilhaften Ausgestaltung ist vorgesehen, dass die Anordnung der Stiftebenen so gewählt ist, dass die Durchbrechungen in den spiraligen Fördergängen je zu unterschiedlichen Zeitpunkten von den Stiften durchtreten werden.

Gemäß einer besonders vorteilhaften Ausgestaltung ist vorgesehen, dass die Durchbrechungen je einen Durchmesser - in Umfangsrichtung betrachtet - aufweisen, der um 2 bis 10 %, bevorzugt etwa 4 % gröBer als der Durchmesser des betreffenden Stiftes ist.

Gemäß einer besonders vorteilhaften Ausgestaltung ist vorgesehen, dass jede Durchbrechung zwei Durchbrechungs-Seitenwände aufweist, die Förderstege der spiraligen Fördergänge begrenzen, und dass die Seitenwände sich parallel zur Drehrichtung der Extruderwalze erstrecken.

Gemäß einer besonders vorteilhaften Ausgestaltung ist vorgesehen, dass die Planetenräder ortsfest angeordnet und durch ein Sonnenrad drehbar sind, das mit der Extruderwalze drehfest verbunden ist, insbesondere einstückig mit dieser ist.

Gemäß einer besonders vorteilhaften Ausgestaltung ist vorgesehen, dass die Zahnradpumpe (30) separat von der Extruderwalze (14) antreibbar ist.

Gemäß einer besonders vorteilhaften Ausgestaltung ist vorgesehen, dass Förderstege des Extrudergehäuses der Zahnradpumpe benachbart mit den Planetenrädern fluchten.

Gemäß einer besonders vorteilhaften Ausgestaltung ist vorgesehen, dass die Anzahl der Planetenräder und die Anzahl der Förderstege ganzzahlige Vielfache zueinander sind, insbesondere zueinander gleich sind.

Weitere Vorteile, Einzelheiten und Merkmale ergeben sich aus der nachfolgenden Beschreibung eines Ausführungsbeispiels anhand der Zeichnung.

Es zeigt:
- Fig. 1: eine schematische Ansicht einer Ausführunsgform einer erfindungsgemäßen Fördervorrichtung;
- Fig. 2: die Fördervorrichtung gemäß Fig. 1, wobei ein Teil, nämlich der Bereich der Extruderwalze mit dem diese umgebenden Extrudergehäuse, in Abwicklung dargestellt ist; und
- Fig. 3: ein Schnitt durch die Extruderwalze.

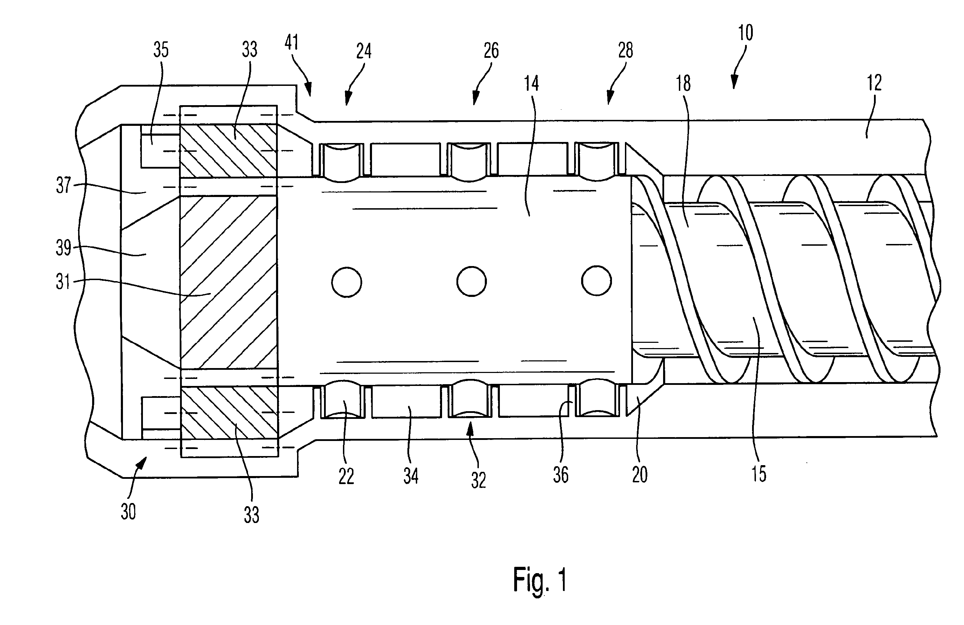

Die in Fig. 1 dargestellte Fördervorrichtung 10 weist ein Extrudergehäuse 12 und eine Extruderwalze 14 auf. Die Extruderwalze 14 ist einstückig mit einer Extruderschnecke 15 verbunden, die sich stromauf zu der Extruderwalze 14 erstreckt. In diesem, vom Extrudat zuerst durchtretenen Bereich weist die Extruderschnecke 15 in an sich bekannter Weise spiralige Schneckenstege 16 und sich dazwischen ebenfalls spiralig erstreckende Fördergänge 18 auf. Dort ist das Extrudergehäuse als an sich bekannter Hohlzylinder mit glatten Innenflächen vorgesehen.

Anschließend hieran erstreckt sich ein Aufweitbereich 20, der eine Durchmesserzunahme zu dem erfindungsgemäß ausgebildeten Bereich der Fördervorrichtung 10 ermöglicht.

Auch wenn hier die Erfindung in Kombination der Extruderwalze 14 mit einer Extruderschnecke 15 beschrieben ist, versteht es sich, dass es anstelle dessen auch möglich ist, ohne die Extruderschnecke 15 auszukommen.

Im Bereich der Extruderwalze 14 ist die Extruderwalze nach der Art eines Außenzylinders ausgebildet. Der Durchmesser der Extruderwalze 14 stimmt mit dem Innendurchmesser des Fördergehäuses im Bereich der Extruderschnecke 15 überein.

Erfindungsgemäß erstrecken sich eine Vielzahl von Stiften 22 von der Extruderwalze 14 nach außen. Die Stifte 22 laufen in den Stiftebenen 24, 26 und 28, und zwar je in Durchbrechungen 32. Die Durchbrechungen 32 durchbrechen Förderstege 36, die sich spiralig erstrecken, und zwar in Fortsetzung der Schneckenstege 16, wobei sich zwischen den Förderstegen 36 entsprechend geformte Fördergänge 34 erstrecken.

In dem in Fig. 1 dargestellten Winkel der Umdrehung der Extruderwalze 14 durchtreten die Stifte 22 je die Durchbrechungen 32. Tatsächlich kann man die Verteilung der Stiftanordnung bevorzugt so vornehmen, dass nicht sämtliche Stifte je zum gleichen Zeitpunkt die Durchbrechungen durchtreten, sonder je zu unterschiedlichen Zeitpunkten. Dies kann leicht über einen entsprechenden Winkelversatz realisiert werden und ermöglicht es, Pulsationen durch gleichmäßige Druckbeaufschlagung zu reduzieren bzw. zu vermeiden.

Während ferner in Fig. 1 alle Durchbrechungen gleichförmig dargestellt sind, ist es erfindungsgemäß günstig, wenn die Stifte unterschiedlich geformt sind, wobei beispielsweise die Stifte der Stiftebene 28 als der Darstellung gegenüber vergrößerte Quader ausgebildet sein können.

Es versteht sich, dass die Durchbrechungen 32 in ihrer Breite je an die Stifte angepaßt sind. Bevorzugt ist die Breite jeder Durchbrechung 32 in der Darstellung gemäß Fig. 1 betrachtet je um weniges größer als der axiale Durchmesser des betreffenden Stifts 22.

Erfindungsgemäß schließt sich an den Bereich der Extruderwalze 14 die erfindungsgemäße Zahnradpumpe 30 an. Die Zahnradpumpe ist in an sich bekannter Weise als Planetenpumpe ausgebildet und weist ein Sonnenrad 31 auf, das mit Planetenrädern 33 kämmt. Die Planetenräder 33 sind über Lager 35 drehfest mit dem Gehäuse 12 verbunden. Das Sonnenrad 31 ist über Streben 37 eines zentralen Lagers 39 ebenfalls an dem Gehäuse 12 abgestützt, so dass sich insofern auch gleich eine Abstützung der bevorzugt mit dem Sonnenrad 31 einstückigen erfindungsgemäßen Extruderwalze 14 ergibt.

Es versteht sich, dass die Durchmesser der einzelnen Räder der Zahnradpumpe 30 in weiten Bereichen an die Erfordernisse anpaßbar sind. Beispielsweise kann der Durchmesser der Planetenräder 33 entsprechend der Höhe der Fördergänge 34 gewählt worden. Im dargestellten Ausführungsbeispiel ist der Durchmesser jedoch etwas größer, so dass ein weiterer Aufweitbereich 41 vorliegt, in welchem sich die Fördergänge 34 radial etwas weiter nach außen erstrecken. In an sich bekannter Weise weisen die Planetenräder 33 und das Sonnenrad 31 die übliche Schrägverzahnung auf. Die Planetenräder sind zu den Förderstegen ausgerichtet.

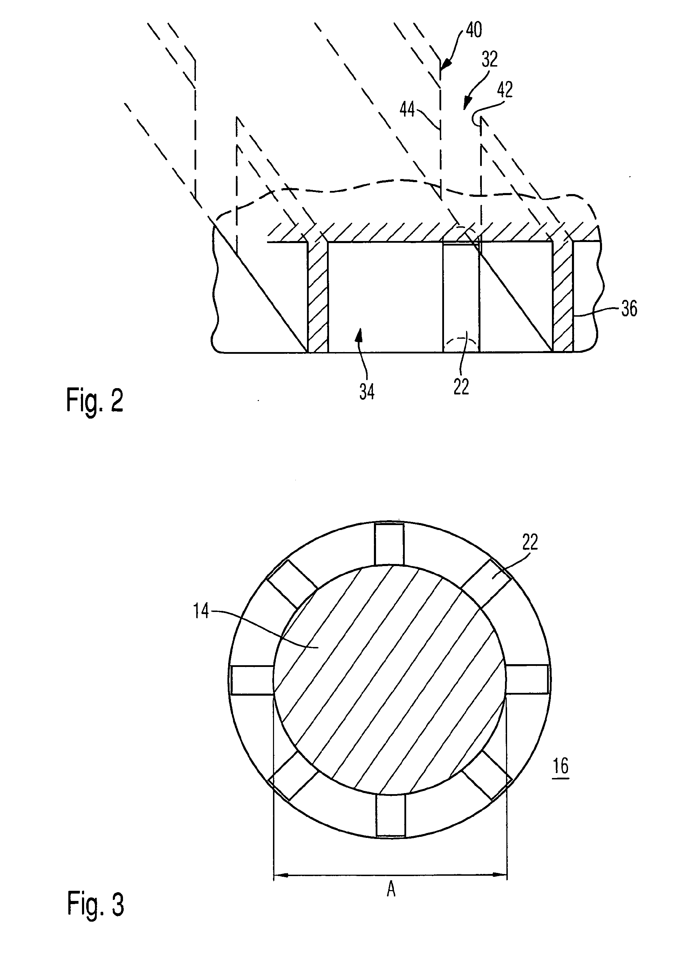

Aus Fig. 2 ist die Abwicklung eines Details einer Stiftanordnung gemäß Fig. 1 ersichtlich. Dort wie auch in den weiteren Figuren werden gleiche Bezugszeichen für gleiche Teile verwendet.

Wie ersichtlich ist, bewegt sich der Stift 22 in Umfangsrichtung - in der Abbildung gemäß Fig. 2 betrachtet - so, dass er genau durch die Durchbrechung 32 im Fördersteg 36 paßt. Hierzu ist die Durchbrechung 32 geeignet ausgestaltet, so dass sich Durchbrechungs-Seitenwände oder -flanken 42 und 44 ergeben, die parallel zur Umfangsrichtung laufen und dementsprechend zur Hauptrichtung des Förderstegs 36 je schräg angeordnet sind. Der Schrägstellungswinkel hängt von der Steigung des Fördergangs 34 bzw. der Förderstege 36 ab.

Wenn der Stift 22 die Durchbrechung durchtritt, entsteht seitlich ein Spalt. Dieser ist erfindungsgemäß recht klein bemessen. Beispielsweise kann er sich auf 5 % des Stiftdurchmessers belaufen.

An der spitzen Vorderkante 44 des Förderstegs 36, zur Durchbrechung 32 hin, wird das von dem Stift mitgenommene Material praktisch aufgeteilt in einen Teil, der die Durchbrechung 32 durchtritt, und einem größeren Teil, der in Richtung des Fördergangs 34 abgelenkt und damit gefördert wird.

Überraschend lässt sich hierdurch eine besonders große Förderwirkung erzielen, wobei es sich versteht, dass auch die Form des Stiftes in beliebiger geeigneter Weise gewählt werden kann, um die Förderwirkung in Richtung der Fördergänge zu verbessern.

Beispielsweise kann die Stiftform nach der Art einer Raute gewählt werden, so dass die schräge Seitenflanke des Stiftes, die dem Fördergang 36 zugewandt ist, das Extrudat praktisch seitlich schräg in den Fördergang hineinschiebt.

Aus Fig. 3 ist ersichtlich, dass die Stifte 22 symmetrisch und gleichförmig um den Umfang der Extruderwalze 14 verteilt angeordnet sein können. Hier nehmen insgesamt acht Stifte einen Teil der Förderfläche ein. Je größer die Stiftanzahl ist, desto größer ist die Förderwirkung, desto kleiner ist andrerseits aber auch die Durchströmfläche, was den Durchsatz wiederum begrenzt. Hier kann in weiten Bereichen eine Anpassung an die Erfordernisse vorgenommen werden.

## Patentansprüche

1. Fördervorrichtung, mit einem Extruder und einer an diese angeschlossenen Zahnradpumpe, **dadurch gekennzeichnet, dass** der Extruder ein Extrudergehäuse aufweist, in welchem eine Extruderwalze drehbar gelagert ist und dass sich von der Extruderwalze eine Mehrzahl von Stiften radial nach auswärts erstrecken, wobei das Extrudergehäuse spiralige Fördergänge sowie Durchbrechungen für die Stifte aufweist.

2. Fördervorrichtung nach Anspruch 1, **dadurch gekennzeichnet, dass** die Extruderwalze mit einer Extruderschnecke verbunden ist, die Fördergänge aufweist, über welche der Extruderwalze zu förderndes Material zuführbar ist.

3. Fördervorrichtung nach einem der vorhergehenden Ansprüche,
**dadurch gekennzeichnet, dass** die Fördergänge im Extrudergegehäuse (12) eine Steigung von weniger als 2, insbesondere etwa 0,8 bis 1,6, bevorzugt etwa 1,2 aufweisen.

4. Fördervorrichtung nach einem der vorhergehenden Ansprüche,
**dadurch gekennzeichnet, dass** die Stifte (22) der Extruderwalze (14) sich je in einer Ebene erstrecken und innerhalb dieser symmetrisch verteilt sind, wobei insbesondere 4, 6 oder 8 Stifte (22) pro Ebene angeordnet sind.

5. Fördervorrichtung nach einem der vorhergehenden Ansprüche,
**dadurch gekennzeichnet, dass** die Stifte (22) je einen kreisförmigen Querschnitt aufweisen und einen Längen/Durchmesserverhältnis von 0,5 bis 2, bevorzugt etwa 1, aufweisen.

6. Fördervorrichtung nach einem der vorhergehenden Ansprüche,
**dadurch gekennzeichnet, dass** die Stifte (22) sich durch im Wesentlichen die gesamte radiale Erstreckung der Fördergänge (34) erstrecken und knapp, insbesondere etwa 5 bis 10%, vor der Wand des Extrudergehäuses (12), bezogen auf die radiale Höhe der Fördergänge (34), enden.

7. Fördervorrichtung nach einem der vorhergehenden Ansprüche,
**dadurch gekennzeichnet, dass** eine Mehrzahl, insbesondere 2 bis 20, bevorzugt 3 bis 12, und besonders bevorzugt 4 bis 8 Ebenen (24, 26, 28, 30) von Stiften (22) axial aufeinanderfolgend angeordnet sind.

8. Fördervorrichtung nach einem der vorhergehenden Ansprüche,
**dadurch gekennzeichnet, dass** auf jeder Stiftebene (24, 26, 28, 30) eine gleiche Anzahl von Stiften (22) angeordnet ist, und zwar bevorzugt axial zueinander ausgerichtet.

9. Fördervorrichtung nach einem der Ansprüche 1 bis 7, **dadurch gekennzeichnet, dass** auf jeder Ebene die gleiche Anzahl von Stiften (22) angeordnet sind, wobei die Stifte (22) zueinander axial versetzt sind.

10. Fördervorrichtung nach einem der Ansprüche 1 bis 7,
**dadurch gekennzeichnet, dass** die Stifte (22) in mehreren Stiftebenen (24, 26, 28, 30) angeordnet sind und mindestens 2 Stiftebenen (24, 26, 28, 30) unterschiedliche Anzahlen von Stiften (22) aufweisen.

11. Fördervorrichtung nach einem der vorhergehenden Ansprüche,
**dadurch gekennzeichnet, dass** die Anordnung der Stiftebenen (24, 26, 28, 30) so gewählt ist, dass die Durchbrechungen (32) in den spiraligen Fördergängen (18) je zu unterschiedlichen Zeitpunkten von den Stiften (22) durchtreten werden.

12. Fördervorrichtung nach einem der vorhergehenden Ansprüche,
**dadurch gekennzeichnet, dass** die Durchbrechungen (32) je einen Durchmesser - in Umfangsrichtung betrachtet - aufweisen, der um 2 bis 10 %, bevorzugt etwa 4 % größer als der Durchmesser des betreffenden Stiftes (22) ist.

13. Fördervorrichtung nach einem der vorhergehenden Ansprüche,
**dadurch gekennzeichnet, dass** jede Durchbrechung zwei Durchbrechungs-Seitenwände (40, 42) aufweist, die Förderstege (36) der spiraligen Fördergänge (34) begrenzen, und dass die Seitenwände (40, 42) sich parallel zur Drehrichtung der Extruderwalze (14) erstrecken.

14. Fördervorrichtung nach einem der vorhergehenden Ansprüche,
**dadurch gekennzeichnet, dass** die Planetenräder (33) ortsfest angeordnet und durch ein Sonnenrad (31) drehbar sind, das mit der Extruderwalze (14) drehfest verbunden ist, insbesondere einstückig mit dieser ist.

15. Fördervorrichtung nach einem der Ansprüche 1 bis 13,
**dadurch gekennzeichnet, dass** die Zahnradpumpe (30) separat von der Extruderwalze (14) antreibbar ist.

16. Fördervorrichtung nach einem der vorhergehenden Ansprüche,
**dadurch gekennzeichnet, dass** Förderstege (36) des Extrudergehäuses (12) der Zahnradpumpe (30) benachbart mit den Planetenrädern (33) fluchten.

17. Fördervorrichtung nach einem der vorhergehenden Ansprüche,
**dadurch gekennzeichnet, dass** die Anzahl der Planetenräder (33) und die Anzahl der Förderstege (36) ganzzahlige Vielfache zueinander sind, insbesondere zueinander gleich sind.
